# EUROPEAN PATENT APPLICATION

(11) **EP 4 160 635 A1**
(43) Date of publication of application: **05.04.2023**
(21) Application number: 21812564.9
(22) Date of filing: 25.05.2021
(51) Int. Cl.: H01G 11/80, H01M 50/105, H01M 50/178, H01M 50/184, H01M 50/548

(54) **SEALING FILM, ELECTRODE LEAD MEMBER, AND BATTERY**

(30) Priority: 25.05.2020 JP 2020090651
(71) Applicant: Fujimori Kogyo Co., Ltd., Tokyo 112-0002 (JP)
(72) Inventor: TAKEYAMA, Shunsuke, Tokyo 112-0002 (JP); SAKURAGI, Takanori, Tokyo 112-0002 (JP); MEGURO, Atsufumi, Tokyo 112-0002 (JP); SHIMIZU, Takashi, Tokyo 112-0002 (JP)
(74) Representative: Lavoix
(86) International application number: PCT/JP2021/019758
(87) International publication number: WO 2021/241560

(57) **Abstract**

A sealing film 1 forms a seal between a first metal base body and a second base body. The sealing film 1 includes a first adhesive layer 1, a second adhesive layer 3, and a base material layer 4. The first adhesive layer 2 mainly contains an acid-modified polyolefin and adheres to the first base body. The second adhesive layer 3 mainly contains a polyolefin and adheres to the second base body. The base material layer 4 is provided between the first adhesive layer 2 and the second adhesive layer 3. The thickness of the first adhesive layer 2 is at least 25 and at most 70 when the total thickness of the sealing film 1 is defined as 100. The thickness of the base material layer 4 is at least 25 and at most 70. The thickness of the second adhesive layer 3 is at least 5 and at most 50.

## Description

### [Technical Field]

The present invention relates to a sealing film, an electrode lead member, and a battery.

Priority is claimed on Japanese Patent Application No. 2020-90651, filed May 25, 2020, the content of which is incorporated herein by reference.

### [Background Art]

In recent years, secondary batteries such as lithium-ion batteries, capacitors, and the like have been attracting attention as storage batteries for storing electrical energy. A storage battery includes, for example, a battery body, a housing container that houses the battery body, and electrode leads connected to the battery body. The housing container is produced using a battery exterior laminate having excellent waterproof and light-shielding performance. The battery exterior laminate is, for example, a laminate obtained by laminating a base material layer made of polyamide or the like and an aluminum foil. The electrode leads are sealed in the housing container with portions thereof including one ends drawn to the outside of the housing container.

In a storage battery, if water enters the housing container, the water may react with components in an electrolyte and generate hydrogen fluoride. Hydrogen fluoride may degrade electrode leads and affect a battery's lifespan. For that reason, it has been proposed to interpose a sealing film (a resin film) between a housing container and electrode leads (see, for example, Patent Document 1).

The sealing film provides adhesion between the electrode leads and the housing container and inhibits formation of a gap between the housing container and the electrode leads. Thus, water is less likely to enter the inside of the housing container from the outside through the gap.

### [Citation List]

### [Patent Document]

[Patent Document 1]
Japanese Unexamined Patent Application, First Publication No. 2017-73200

### [Summary of Invention]

### [Technical Problem]

A film for sealing (hereinafter referred to as a sealing film) preferably has high adhesion strength to electrode leads and a housing container. In addition, since the sealing film may come into contact with an electrolyte in the housing container, it needs to have resistance to the electrolyte. That is, the sealing film needs to have the following three properties.
(i) Adhesion strength to electrode leads (a first base body).
(ii) Adhesion strength to a housing container (a second base body).
(iii) Resistance to electrolyte.

However, the three properties (i) to (iii) are in a trade-off relationship, and it is not easy to improve all of the properties (i) to (iii).

An object of one aspect of the present invention is to provide a sealing film, which has high adhesion strength to a first base body and a second base body and has resistance to an electrolyte, an electrode lead member, and a battery.

### [Solution to Problem]

In order to solve the above problems, one aspect of the present invention includes the following aspects.
[1] A sealing film forming a seal between a first metal base body and a second base body, including: a first adhesive layer that mainly contains an acid-modified polyolefin and adheres to the first base body; a second adhesive layer that mainly contains a polyolefin and adheres to the second base body; and a base material layer provided between the first adhesive layer and the second adhesive layer, wherein the thickness of the first adhesive layer is at least 25 and at most 70 when the total thickness of the sealing film is defined as 100, the thickness of the base material layer is at least 25 and at most 70 when the total thickness of the sealing film is defined as 100, and the thickness of the second adhesive layer is at least 5 and at most 50 when the total thickness of the sealing film is defined as 100.
[2] The sealing film according to [1], wherein the melting point of a resin constituting the base material layer is higher than the melting point of a resin constituting the first adhesive layer or the second adhesive layer.
[3] The sealing film according to [1] or [2], wherein the polyolefin constituting the second adhesive layer is an acid-modified polyolefin.
[4] The sealing film according to any one of [1] to [3], wherein the melting point of a resin constituting the base material layer is at least 150 °C and at most 170 °C, and the melting point of a resin constituting the second adhesive layer is at least 110 °C and at most 150 °C.
[5] The sealing film according to any one of [1] to [4], wherein the melting point of a resin constituting the first adhesive layer is at least 110 °C and at most 150 °C.
[6] An electrode lead member including: the sealing film according to any one of [1] to [5]; and the first base body, which is an electrode lead extending in one direction.
[7] A battery including: the electrode lead member according to [6], a battery body to which the electrode lead is connected, and the second base body, which is a housing container that houses the battery body.

### [Advantageous Effects of Invention]

According to one aspect of the present invention, it is possible to provide a sealing film that has high adhesion strength to a first base body and a second base body and has resistance to an electrolyte, the electrode lead member, and a battery.

### [Brief Description of Drawings]

Fig. 1 is a schematic cross-sectional view showing a sealing film of an embodiment.
Fig. 2 is a schematic perspective view showing an electrode lead member of an embodiment.
Fig. 3 is a schematic perspective view showing a battery of an embodiment.
Fig. 4 is a cross-sectional view along line segment I-I in Fig. 3.

### [Description of Embodiments]

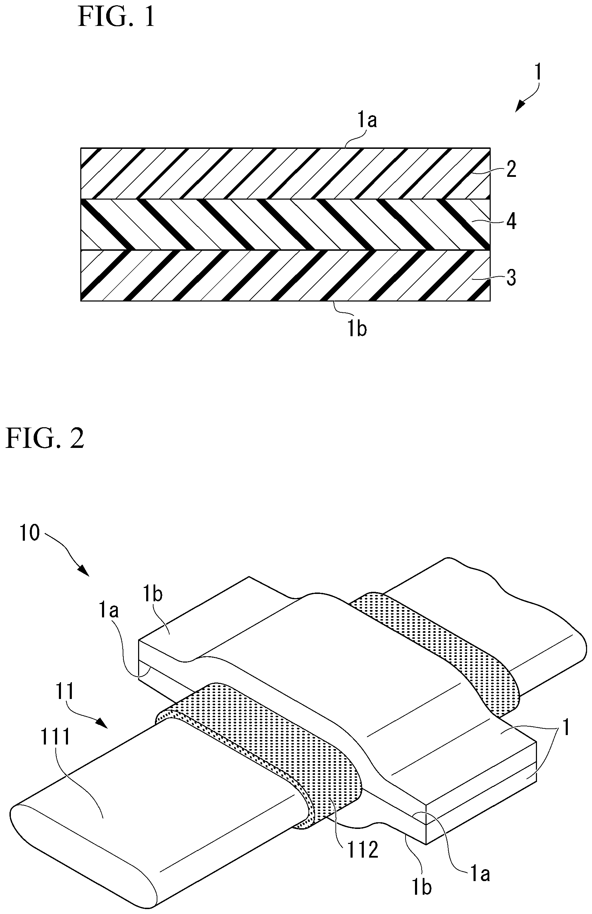

A sealing film, an electrode lead member, and a battery according to embodiments will be described below with reference to Figs. 1 to 4. Also, dimensions, ratios, and the like of constituent elements in the drawings may differ from those of actual ones.

### <Sealing film>

Fig. 1 is a schematic cross-sectional view showing a sealing film 1 of an embodiment. Fig. 2 is a schematic perspective view showing an electrode lead member 10 of an embodiment.

As shown in Fig. 2, the electrode lead member 10 includes an electrode lead 11 and a sealing film 1. The electrode lead 11 is an example of a "first base body."

As shown in Fig. 1, the sealing film 1 includes a first adhesive layer 2, a second adhesive layer 3, and a base material layer 4.

### [First adhesive layer]

The first adhesive layer 2 is a layer that is fused (adheres) to the electrode lead 11 (see FIG. 2) by heating or pressing. A surface of the first adhesive layer 2 is one surface 1a of the sealing film 1. The first adhesive layer 2 is made of a resin.

The first adhesive layer 2 mainly contains an acid-modified polyolefin. The fact that the first adhesive layer 2 "mainly contains an acid-modified polyolefin" means that the amount of the acid-modified polyolefin is the highest among resins constituting the first adhesive layer 2. The first adhesive layer 2 preferably contains at least 50% by mass of the acid-modified polyolefin (preferably more than 50% by mass of the acid-modified polyolefin) with respect to the total amount of the first adhesive layer 2. The first adhesive layer 2 preferably contains at least 80% by mass of the acid-modified polyolefin with respect to the total amount of the first adhesive layer 2.

The first adhesive layer 2 may contain 100% by mass of the acid-modified polyolefin with respect to the total amount of the first adhesive layer 2.

In one embodiment of the present invention, the fact that the first adhesive layer 2 "mainly contains acid-modified polyolefin" includes an aspect in which the first adhesive layer 2 contains at least 80% by mass and at most 100% by mass of the acid-modified polyolefin with respect to the total amount of the first adhesive layer 2.

As the polyolefin constituting the first adhesive layer 2, polypropylene, polyethylene, poly-1-butene, polyisobutylene, and the like are exemplary examples. Among them, polypropylene is preferable because of its excellent flexibility. Hereinafter, polypropylene may be abbreviated as "PP."

The polyolefin may be a copolymer of propylene and ethylene (a propylene-ethylene copolymer). Among them, a random copolymer of propylene and ethylene is preferable. The polyolefin may be a copolymer of propylene and an olefin-based monomer. As the olefin-based monomer, 1-butene, isobutylene, 1-hexene, and the like are exemplary examples.

The acid-modified polyolefin is a polyolefin-based resin modified with an unsaturated carboxylic acid or its derivatives and is a resin having an acid functional group such as a carboxy group or a carboxylic anhydride group in a polyolefin-based resin. The acid-modified polyolefin is obtained by modifying a polyolefin-based resin with an unsaturated carboxylic acid or its derivatives, copolymerizing acid functional group-containing monomers with an olefin, and the like. The use of the acid-modified polyolefin can enhance adhesion of the first adhesive layer 2 to the electrode lead 11 (see Fig. 2).

As the acid-modified polyolefin, acid-modified polypropylene (acid-modified PP) is preferable because it has excellent heat resistance. Acid-modified PP is, for example, a polymer obtained by graft-copolymerizing polypropylene or a propylene-ethylene copolymer with a monomer having a carboxy group. As the monomer having a carboxy group, unsaturated carboxylic acids such as acrylic acid and methacrylic acid, unsaturated carboxylic acid esters such as ethyl acrylate, acid anhydrides such as maleic anhydride, and the like are exemplary examples.

Acid-modified PP includes ionomers in which a carboxylic acid group possessed by acid-modified polypropylene or an acid-modified propylene-ethylene copolymer is neutralized with a metal hydroxide, an alkoxide, a lower fatty acid salt, or the like.

The acid group of the acid-modified PP is preferably a maleic anhydride group. That is, maleic anhydride-modified PP is preferable as the acid-modified PP.

The melting point of the resin constituting the first adhesive layer 2 is preferably at least 110 °C and at most 150 °C.

When the melting point of the resin constituting the first adhesive layer 2 is at least 110 °C, the first adhesive layer 2 is unlikely to become excessively thin during thermocompression bonding, and its adhesion strength is easily secured. When the melting point of the resin constituting the first adhesive layer 2 is at most 150 °C, the resin easily flows during thermocompression bonding, and thus the resin sufficiently wraps around the electrode lead 11 and easily seals the entire periphery of the electrode lead 11.

In a case in which the "resin constituting the first adhesive layer 2" is a polymer alloy of two or more resins, the "melting point of the resin constituting the first adhesive layer 2" is the melting point of the polymer alloy constituting the first adhesive layer 2.

In the first adhesive layer 2, as optional components other than polyolefins, known additives such as stabilizers, antistatic agents, colorants, and the like are exemplary examples.

The thickness of the first adhesive layer 2 is at least 25 and at most 70 when the total thickness of the sealing film 1 is defined as 100. That is, the thickness of the first adhesive layer 2 is at least 25% and at most 70% of the total thickness of the sealing film 1. The ratio of the thickness of a layer when the total thickness of the sealing film 1 is defined as 100 is referred to as a "thickness ratio."

When the thickness ratio of the first adhesive layer 2 is at least 25, sufficient adhesion strength between the first adhesive layer 2 and the electrode lead 11 can be secured. When the thickness ratio of the first adhesive layer 2 is at most 70, sufficient thicknesses can be given to the second adhesive layer 3 and the base material layer 4. For that reason, electrolyte resistance of the sealing film 1 is not lowered, and the adhesion strength between the second adhesive layer 3 and the housing container can be increased. Also, "electrolyte resistance" is resistance to an electrolyte.

### [Second adhesive layer]

The second adhesive layer 3 is, for example, a layer that is fused (adheres) to the housing container by heating or pressing. The housing container will be described later. A surface of the second adhesive layer 3 is the other surface 1b of the sealing film 1. The second adhesive layer 3 is made of a resin.

The second adhesive layer 3 mainly contains polyolefin. The fact that the second adhesive layer 3 "mainly contains polyolefin" means that the amount of polyolefin is the highest in the resin constituting the second adhesive layer 3. The second adhesive layer 3 preferably contains at least 50% by mass of polyolefin (preferably more than 50% by mass of polyolefin) with respect to the total amount of the second adhesive layer 3. The second adhesive layer 3 preferably contains at least 80% by mass of polyolefin with respect to the total amount of the second adhesive layer 3.

The second adhesive layer 3 may contain 100% by mass of acid-modified polyolefin with respect to the total amount of the second adhesive layer 3.

In one embodiment of the present invention, the fact that the second adhesive layer 3 "mainly contains acid-modified polyolefin" includes an aspect that the second adhesive layer 3 contains at least 80% by mass and at most 100% by mass of acid-modified polyolefin with respect to the total amount of the second adhesive layer 3.

As the polyolefin constituting the second adhesive layer 3, polypropylene (PP), polyethylene, poly-1-butene, polyisobutylene, and the like are exemplary examples. Among them, PP is preferable because of its excellent flexibility.

The polyolefin may be a copolymer of propylene and ethylene (propylene-ethylene copolymer). Among them, a random copolymer of propylene and ethylene is preferable. The polyolefin may be a copolymer (for example, a random copolymer) of propylene and an olefin-based monomer. As the olefin-based monomer, 1-butene, isobutylene, 1-hexene, and the like are exemplary examples.

The polyolefin constituting the second adhesive layer 3 may be an acid-modified polyolefin. As the acid-modified polyolefin, acid-modified PP is preferable because of its excellent heat resistance. For the acid-modified PP, the acid-modified PP exemplified as the material of the first adhesive layer 2 is preferably used. As the acid-modified PP, a polymer obtained by acid-modifying a random copolymer of propylene and ethylene is preferable because of its excellent flexibility. The use of acid-modified polyolefin can enhance adhesion of the second adhesive layer 3 to the housing container.

The second adhesive layer 3 may contain both acid-modified PP and acid-modified polyethylene. In a case in which the second adhesive layer 3 contains both acid-modified PP and acid-modified polyethylene, the melting point of the second adhesive layer 3 can be lowered, and a heating temperature at the time of fusing the second adhesive layer 3 can be lowered, and thus deterioration of the first adhesive layer 2 can be inhibited.

The melting point of the resin constituting the second adhesive layer 3 is preferably at least 110 °C and at most 150 °C.

When the melting point of the resin constituting the second adhesive layer 3 is at least 110 °C, the second adhesive layer 3 is unlikely to become excessively thin during thermocompression bonding, and its adhesion strength is easily secured. When the melting point of the resin constituting the second adhesive layer 3 is at most 150 °C, the resin easily flows during thermocompression bonding, and thus it is easy to seal between the housing container and the electrode lead 11.

In a case in which the "resin constituting the second adhesive layer 3" is a polymer alloy of two or more resins, the "melting point of the resin constituting the second adhesive layer 3" is the melting point of the polymer alloy constituting the second adhesive layer 3.

In the second adhesive layer 3, as optional components other than the acid-modified polyolefin, known additives such as stabilizers, antistatic agents, and colorants are exemplary examples.

The thickness (thickness ratio) of the second adhesive layer 3 is at least 5 and at most 50 when the total thickness of the sealing film 1 is defined as 100. That is, the thickness of the second adhesive layer 3 is at least 5% and at most 50% of the total thickness of the sealing film 1.

When the thickness ratio of the second adhesive layer 3 is at least 5, sufficient adhesion strength between the second adhesive layer 3 and the housing container can be secured. When the thickness ratio of the second adhesive layer 3 is at most 50, sufficient thicknesses can be given to the first adhesive layer 2 and the base material layer 4. For that reason, the electrolyte resistance of the sealing film 1 is not lowered, and the adhesion strength between the first adhesive layer 2 and the electrode lead 11 can be increased.

### [Base material layer]

The base material layer 4 is interposed between the first adhesive layer 2 and the second adhesive layer 3. The base material layer 4 is made of a resin.

The base material layer 4 mainly contains polyolefin, for example. The fact that the base material layer 4 "mainly contains polyolefin" means that the amount of polyolefin is the highest in the resin constituting the base material layer 4. The base material layer 4 preferably contains at least 50% by mass of polyolefin with respect to the total amount of the base material layer 4 (preferably more than 50% by mass of polyolefin with respect to the total amount of the base material layer 4). The base material layer 4 preferably contains at least 80% by mass of polyolefin with respect to the total amount of the base material layer 4.

The base material layer 4 may contain 100% by mass of acid-modified polyolefin with respect to the total amount of the base material layer 4.

In one embodiment of the present invention, the fact that the base material layer 4 "mainly contains acid-modified polyolefin" includes an aspect that the base material layer 4 contains at least 80% by mass and at most 100% by mass of the acid-modified polyolefin with respect to the total amount of the base material layer 4.

As the polyolefin constituting the base material layer 4, polypropylene (PP), polyethylene, poly-1-butene, polyisobutylene, and the like are exemplary examples. Among them, PP is preferable because of its excellent flexibility.

The polyolefin constituting the base material layer 4 may be a homopolymer of one olefin or a copolymer of two or more olefins. As the homopolymer, a homopolymer of propylene only (homo PP) is exemplary examples. As the copolymer, a copolymer of propylene and an olefin-based monomer (ethylene, 1-butene, isobutylene, 1-hexene, or the like), such as a propylene-ethylene copolymer are exemplary examples.

As the polyolefin constituting the base material layer 4, an impact copolymer (ICP) is preferable. ICP has a phase-separated structure having a first phase and a second phase, for example, a sea-island structure. A sea-island structure is a structure in which a plurality of second phases corresponding to "islands" are dispersed in a first phase corresponding to a "sea."

The first phase is composed of, for example, a homopolymer of olefin-based monomers such as propylene and ethylene. The second phase is composed of a polymer different from the homopolymer constituting the first phase. The second phase includes, for example, a polymer of olefinic monomers such as propylene and ethylene, for example, ethylene propylene rubber (EPR). The second phase is composed of, for example, a main phase and a surface layer that covers a surface of the main phase. The main phase is composed of polyethylene, for example. The surface layer is made of EPR, for example.

ICP in which the homopolymer constituting the first phase is homo PP is called a polypropylene ICP or a polypropylene dispersion. ICP in which the homopolymer constituting the first phase is homo PP is a so-called block PP. ICP is also called a heterophasic copolymer, or a block copolymer.

Also, a constituent material of the base material layer is not particularly limited, and resins other than polyolefin (for example, fluororesins such as polychlorotrifluoroethylene) may be used.

The thickness (thickness ratio) of the base material layer 4 is at least 25 and at most 70 when the total thickness of the sealing film 1 is defined as 100. That is, the thickness of the base material layer 4 is at least 25 and at most 70 of the total thickness of the sealing film 1.

When the thickness ratio of the base material layer 4 is at least 25, the electrolyte resistance of the sealing film 1 can be sufficiently secured. Also, when the thickness ratio of the base material layer 4 is at least 25, the resin does not flow too much, and its fluidity required for press-bonding is easily exhibited.

When the thickness ratio of the base material layer 4 is at most 70, sufficient thicknesses can be given to the first adhesive layer 2 and the second adhesive layer 3. For that reason, both the adhesion strength between the first adhesive layer 2 and the electrode lead 11 and the adhesion strength between the second adhesive layer 3 and the housing container can be increased. In addition, when the thickness ratio of the base material layer 4 is at most 70, the fluidity of the resin does not decrease, and the fluidity of the resin during thermocompression bonding can be inhibited within an appropriate range.

The melting point of the resin constituting the base material layer 4 is preferably at least 150 °C and at most 170 °C.

When the melting point of the resin constituting the base material layer 4 is at least 150 °C, the electrolyte resistance of the sealing film 1 is easily secured. Also, heat resistance can be imparted to the sealing film 1.

When the melting point of the resin constituting the base material layer 4 is at most 170 °C, flexibility can be imparted to the sealing film 1. For that reason, gaps are less likely to be generated between the electrode lead 11, the housing container, and the sealing film 1.

A melting point M4 of the resin constituting the base material layer 4 is higher than a melting point M2 of the resin constituting the first adhesive layer 2 or a melting point M3 of the resin constituting the second adhesive layer 3. That is, the melting point M4 is higher than the melting point M2 or the melting point M3. The melting point M4 is preferably higher than both of the melting point M2 and the melting point M3. In one aspect of the present invention, the melting point M4 is preferably higher than at least one of the melting point M2 and the melting point M3.

When the melting point M4 is higher than the melting point M2, it becomes easier to secure the electrolyte resistance of the sealing film 1 without lowering the adhesion strength between the first adhesive layer 2 and the electrode lead 11. When the melting point M4 is higher than the melting point M3, it becomes easier to secure the electrolyte resistance of the sealing film 1 without lowering the adhesion strength between the second adhesive layer 3 and the housing container.

When the melting point M4 is higher than either the melting point M2 or the melting point M3 or both thereof, there is also an advantage that heat resistance can be easily imparted to the sealing film 1.

### <Electrode lead member>

As shown in Fig. 2, the electrode lead member 10 has the electrode lead 11 and a pair of sealing films 1.

The pair of sealing films 1 are disposed such that their first adhesive layers 2 face each other. The pair of sealing films 1 sandwich the electrode lead 11. The pair of sealing films 1 are in contact with regions corresponding to one surface and the other surface of the electrode lead 11. For that reason, the pair of sealing films 1 are in contact with the entire circumference of the electrode lead 11 as a whole.

The electrode lead 11 has a lead body 111 and a surface treatment layer 112. The electrode lead 11 extends linearly in one direction. The electrode lead 11 is made of a metal.

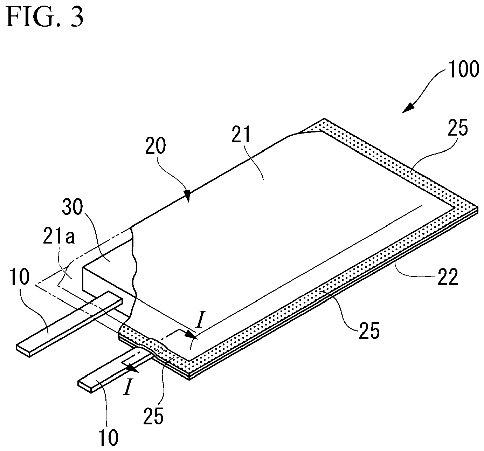

The electrode lead 11 has conductivity. The electrode lead 11 is electrically connected to a lithium-ion battery 30 (see Fig. 3). The electrode lead 11 conducts electricity between the lithium-ion battery 30 and an external device.

For a material of the lead body 111, known metals such as aluminum, copper, nickel, iron, gold, platinum, and various alloys can be used. Among them, aluminum or copper is preferable because they have excellent conductivity and are advantageous in cost.

A surface of the lead body 111 may be nickel-plated. The nickel plating of the lead body 111 may be formed by electroplating using a Watts bath containing nickel sulfate, nickel chloride, boric acid, or the like as a main component. The nickel plating of the lead body 111 is preferably performed using a nickel sulfamate plating bath containing nickel sulfamate and boric acid as main components. Since the plated film formed by this method has excellent flexibility, the plated film is less likely to crack.

The lead body 111 is preferably an aluminum plate or a nickel-plated copper plate.

The surface treatment layer 112 is formed on the surface of the lead body 111. The surface treatment layer 112 has corrosion resistance. "Corrosion resistance" refers to a property of being resistant to corrosion caused by an electrolyte inside a battery. As the surface treatment layer 112, for example, an acid-resistant coating made of phosphate, chromate, fluoride, triazinethiol compound, and the like are exemplary examples. The acid-resistant coating can be formed by subjecting the lead body 111 to a chemical conversion treatment.

Although the surface treatment layer 112 is formed on a part of the surface of the lead body 111 in Fig. 2, the surface treatment layer 112 may be formed over the entire surface of the lead body 111. In addition, the surface treatment layer may not be formed on the electrode lead.

Since the thickness ratios of the first adhesive layer 2, the base material layer 4, and the second adhesive layer 3 are within the above ranges, the sealing film 1 has good adhesion strength to the electrode lead 11 and the housing container and has resistance to the electrolyte. Since the sealing film 1 has good adhesion strength to the electrode lead 11 and the housing container, it can inhibit entry of water into the housing container from the outside. Since the sealing film 1 has resistance to the electrolyte, it can realize the battery 100 that is less likely to deteriorate and has high reliability.

The sealing film 1 contains acid-modified polyolefin as a material for forming the first adhesive layer 2. For that reason, the first adhesive layer 2 is easily heat-sealed with the electrode lead 11 and can seal an interface between the electrode lead 11 and the sealing film 1. Accordingly, it is possible to inhibit entry of water into the housing container from the outside.

The sealing film 1 contains acid-modified polyolefin as a material for forming the second adhesive layer 3. For that reason, the second adhesive layer 3 is easily heat-sealed with a resin material constituting the housing container of the battery and easily seals an interface between the housing container and the sealing film 1.

Since the electrode lead member 10 includes the sealing film 1, it is possible to inhibit entry of water into the housing container from the outside.

### <Battery>

Fig. 3 is a schematic perspective view showing the battery 100 of the embodiment.

As shown in Fig. 3, the battery 100 has the above-described electrode lead member 10, a housing container 20, and the lithium-ion battery 30 (a battery body).

The housing container 20 has a container body 21 and a lid 22. The housing container 20 is an example of a "second base body."

The housing container body 21 has a molded portion 21a that forms a recessed portion for housing the lithium-ion battery 30. The housing container body 21 is obtained by drawing a battery exterior laminate. The lid 22 is configured of a battery exterior laminate and has an area equivalent to that of the housing container body 21 in a plane view. The battery exterior laminate will be described later.

The housing container 20 is formed by overlapping the housing container body 21 and the lid 22 and heat-sealing a peripheral edge portion 25 thereof.

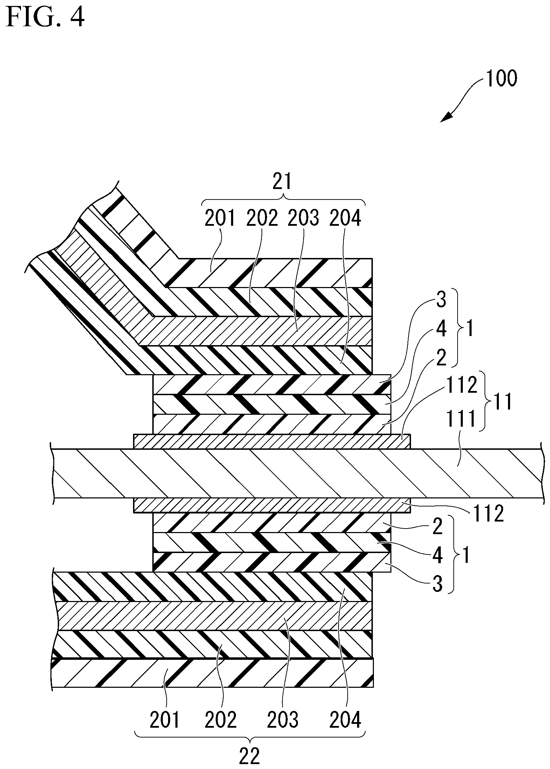

Fig. 4 is a cross-sectional view along line I-I in Fig. 3.

As shown in Fig. 4, the battery exterior laminate serving as a constituent material of the housing container body 21 and the lid 22 is a laminate in which a first film base material 201, a second film base material 202, a metal foil 203, and a sealant layer 204 are laminated in order.

A resin constituting the first film base material 201 and the second film base material 202 is not particularly limited, but polyamide, polyethylene terephthalate (PET), phenolic resin, polypropylene, and the like are suitable.

As the metal foil 203, aluminum foil, stainless steel foil, copper foil, iron foil, or the like is preferable.

The sealant layer 204 is in contact and heat-sealed with the second adhesive layer 3 of the sealing film 1. As a resin constituting the sealant layer 204, a resin that can be fused with the sealing film 1 is selected. The resin constituting the sealant layer 204, a polypropylene-based resin and a polyethylene-based resin are exemplary examples. For the polypropylene-based resin, a homopolymer of polypropylene, a copolymer of propylene and ethylene, or the like can be used. For the polyethylene-based resin, low-density polyethylene, linear low-density polyethylene, or the like may be used.

As shown in Figs. 3 and 4, in the battery 100, the electrode lead 11 is drawn out of the housing container 20 from the lithium-ion battery 30 inside the housing container 20 (inside the molding portion 21a). The electrode lead 11 is fused to the sealant layer 204 of the housing container 20 via the sealing film 1.

According to the battery 100, since the electrode lead member 10 has the sealing film 1 described above, it is possible to inhibit entry of water into the housing container from the outside. For that reason, the battery 100 that is less likely to deteriorate and has high reliability can be realized.

Although the preferred embodiment according to the present invention has been described above with reference to the accompanying drawings, the present invention is not limited to such an example. All the shapes, combinations, and the like of the constituent members shown in the above example are merely examples, and various modifications can be made on the basis of design requirements and the like without departing from the gist of the present invention. For example, the first adhesive layer and the second adhesive layer may contain resins other than polyolefin.

### [Examples]

Although the present invention will be described below with reference to examples, the present invention is not limited to these examples.

### <Production of sealing film>

The sealing film in which the first adhesive layer, the base material layer, and the second adhesive layer are laminated in order was produced as follows. A laminate was obtained by separately heating and melting the resins used as raw materials for each layer and performing simultaneous multilayer film formation using an extruder capable of simultaneous multilayer extrusion molding. By cutting this laminate into a predetermined size, sealing films of each example and comparative example were obtained. The sealing films were formed in strip shapes (having a width of 15 mm and a thickness of 100 µm).

The constituent materials of the first adhesive layer, the base material layer, and the second adhesive layer are as follows.
First adhesive layer: maleic anhydride modified polypropylene (melting point 140 °C)
Base material layer: polypropylene ICP (melting point 161 °C)
Second adhesive layer: random copolymer of propylene and ethylene (melting point 140 °C)

The melting point M4 of the polypropylene ICP, which is the resin constituting the base material layer, is higher than the melting point M2 of the resin constituting the first adhesive layer and the melting point M3 of the resin constituting the second adhesive layer.

Maleic anhydride-modified polypropylene is a polymer obtained by graft polymerizing maleic anhydride to a random copolymer of propylene and ethylene. Polypropylene ICP has a structure (sea-island structure) in which the second phases are dispersed in the first phase. The first phase consists of homo PP. The second phase contains ethylene propylene rubber and polyethylene. Polypropylene ICP is a mixture containing PP, ethylene propylene rubber, and polyethylene.

### <Production of electrode lead>

The electrode lead having the lead body and the surface treatment layer formed on the surface of the lead body was produced. A rectangular nickel-plated copper foil having a width of 45 mm×a length of 52 mm was used for the lead body.

### <Production of battery exterior laminate>

A 12 µm-thick PET film, a 15 µm-thick nylon film, a 40 µm-thick aluminum foil, and an 80 µm-thick PP film were laminated by dry lamination to obtain the battery exterior laminate.

The PET film, the nylon film, the aluminum foil, and the PP film respectively correspond to the first film base material 201, the second film base material 202, the metal foil 203, and the sealant layer 204 (see Fig. 4).

### <Measurement of adhesion strength to electrode lead>

The adhesion strength of the sealing film to the electrode lead was measured as follows.

A laminate obtained by superimposing the sealing film and the electrode lead wire and bonding them by heat sealing, and a measurement sample was obtained by cutting the laminate into strips (width 10 mm×length 120 mm). Conditions for heat sealing was set to 180 °C, 0.5 MPa, and 10 seconds.

180 degree peel strength of the measurement sample was measured as follows using a tester (tabletop precision universal testing machine manufactured by Shimadzu Corporation: Autograph AGS-500NX).

An end portion of the sealing film and the end portion of the electrode lead were gripped by a gripping portion of the tester, and the sealing film was peeled off from the electrode lead to be peeled 180 degrees. The peeling speed was set to 50 mm/min.

The case in which the peel strength is at least 10 N/10 mm or more was determined as "good" (OK) and was evaluated as having high adhesion strength to the electrode lead. The case in which the peel strength was less than 10 N/10 mm was determined as "weak" (NG), and the adhesion strength to the electrode lead was evaluated as low. Table 1 shows the results.

### <Resistance test against electrolyte>

The resistance of the sealing film to the electrolyte was evaluated as follows.

A packaging bag was made using the battery exterior laminate, and an electrolyte (DMC:EMC:EC=4:3:3) containing 1.0 mol/liter of LiPF₆ was put therein. 0.2% by mass (2000 ppm) of pure water was added to the electrolyte.

The measurement sample produced in the same manner as described in "Measurement of adhesion strength to electrode lead" was put into the packaging bag and immersed in the electrolyte. After the packaging bag into which the measurement sample was put was stored in an oven at 85 °C for 7 days, the peel strength was measured by the same method as in "Measurement of adhesion strength to electrode lead."

The case in which the peel strength was at least 10 N/10 mm was determined as "good" (OK) and was evaluated as having high resistance to the electrolyte. The case in which the peel strength was less than 10 N/10 mm was determined as "weak" (NG) and was evaluated as having low resistance to the electrolyte. Table 1 shows the results.

### <Measurement of adhesion strength to housing container>

The adhesion strength of the sealing film to the housing container was measured as follows.

A measurement sample was obtained by superimposing the electrode lead heat-sealed with the sealing film on the battery exterior laminate and bonding them by heat sealing. Conditions for heat sealing were set to 200 °C, 0.3 MPa, and 3.5 seconds.

For the measurement sample, an end portion of the battery outer layer laminate and an end portion of the electrode lead were gripped by the gripping portion of the tester, and the battery outer layer laminate was peeled off from the electrode lead to be peeled 180 degrees. The peeling speed was 50 mm/min.

The case in which the peel strength was at least 100 N/15 mm was determined as "good" (OK) and was evaluated as having high adhesion strength to the housing container. The case in which the peel strength was less than 100 N/15 mm was determined as "weak" (NG), and was evaluated as having low adhesion strength to the housing container. Table 1 shows the results.

**[Table 1]**

| | Second adhesive layer | Base material layer | First adhesive layer | Adhesion strength of housing container | Resistance to electrolyte | Adhesion strength of electrode lead |
|---|---|---|---|---|---|---|
| Example 1 | 5 | 25 | 70 | OK | OK | OK |
| Example 2 | 5 | 70 | 25 | OK | OK | OK |
| Example 3 | 15 | 60 | 25 | OK | OK | OK |
| Example 4 | 50 | 25 | 25 | OK | OK | OK |
| Comparative example 1 | 1 | 25 | 74 | NG | OK | OK |
| Comparative example 2 | 55 | 25 | 20 | OK | OK | NG |
| Comparative example 3 | 20 | 10 | 70 | OK | NG | OK |
| Comparative example 4 | 5 | 80 | 15 | OK | OK | NG |
| Comparative example 5 | 20 | 70 | 10 | OK | OK | NG |
| Comparative example 6 | 5 | 15 | 80 | OK | NG | OK |

As shown in Table 1, in Comparative Example 1, since the second adhesive layer was thin, the adhesion strength to the housing container was considered to be low. In Comparative Examples 2, 4 and 5, since the first adhesive layer was thin, the adhesion strength to the electrode lead was considered to be low. In Comparative Examples 3 and 6, since the base layer was thin, the electrolyte resistance is considered to be low.

On the other hand, in Examples 1 to 4, it was found that the adhesion strength to the electrode lead and the housing container was high, and that they had resistance to the electrolyte.

### [Reference Signs List]

1 Sealing film
2 First adhesive layer
3 Second adhesive layer
4 Base material layer
10 Electrode lead member
11 Electrode lead (first base body)
20 Housing container (second base body)
30 Lithium-ion battery (battery body)
100 Battery

## Claims

1. A sealing film forming a seal between a first metal base body and a second base body, comprising:
a first adhesive layer that mainly contains an acid-modified polyolefin and adheres to the first base body;
a second adhesive layer that mainly contains a polyolefin and adheres to the second base body; and
a base material layer provided between the first adhesive layer and the second adhesive layer,
wherein a thickness of the first adhesive layer is at least 25 and at most 70 when the total thickness of the sealing film is defined as 100,
a thickness of the base material layer is at least 25 and at most 70 when the total thickness of the sealing film is defined as 100, and
a thickness of the second adhesive layer is at least 5 and at most 50 when the total thickness of the sealing film is defined as 100.

2. The sealing film according to claim 1, wherein a melting point of a resin constituting the base material layer is higher than a melting point of a resin constituting the first adhesive layer or the second adhesive layer.

3. The sealing film according to claim 1 or 2, wherein the polyolefin constituting the second adhesive layer is an acid-modified polyolefin.

4. The sealing film according to any one of claims 1 to 3, wherein a melting point of a resin constituting the base material layer is at least 150 °C and at most 170 °C, and
a melting point of a resin constituting the second adhesive layer is at least 110 °C and at most 150 °C.

5. The sealing film according to any one of claims 1 to 4, wherein a melting point of a resin constituting the first adhesive layer is at least 110 °C and at most 150 °C.

6. An electrode lead member comprising:
the sealing film according to any one of claims 1 to 5; and
the first base body, which is an electrode lead extending in one direction.

7. A battery comprising:
the electrode lead member according to claim 6,
a battery body to which the electrode lead member is connected, and
the second base body, which is a housing container that houses the battery body.
